# EUROPÄISCHE PATENTSCHRIFT

(11) **EP 2 283 954 B1**
(45) Veröffentlichungstag und Bekanntmachung des Hinweises auf die Patenterteilung: **08.01.2014**
(21) Anmeldenummer: 09010483.7
(22) Anmeldetag: 14.08.2009
(51) Int. Cl.: B23B 27/00, B23C 5/10

(54) **Schneideinsatz für ein Bearbeitungswerkzeug und Bearbeitungswerkzeug**
Cutting insert for a machining tool and machining tool
Plaquette de coupe pour un outil de façonnage et outil de façonnage

(43) Veröffentlichungstag der Anmeldung: 16.02.2011
(73) Patentinhaber: KARL-HEINZ ARNOLD GmbH, 73760 Ostfildern (DE)
(72) Erfinder: Braun, Harald, 73061 Ebersbach (DE); Arnold, Klaus-Michael, 73760 Ostfildern (DE)
(74) Vertreter: Vogler, Bernd

(56) Entgegenhaltungen:
- WO-A-01/45885
- WO-A-2006/136338
- DE-A1- 19 846 548
- DE-C2- 3 448 086

## Beschreibung

Die Erfindung betrifft einen Schneideinsatz für ein Bearbeitungswerkzeug, mit einem Basisabschnitt, durch den sich längs einer Längsachse eine Durchbrechung zur Durchführung eines Spannelementes hindurch erstreckt, durch das der Schneideinsatz an einem zugeordneten Halter des Bearbeitungswerkzeugs festspannbar ist, wobei am Außenumfang des Basisabschnitts wenigstens ein nach radial außen abragender Schneidabschnitt mit wenigstens einer Schneidkante angeordnet ist, und wobei der Basisabschnitt eine die Durchbrechung umrandende Sitzflä-che aufweist, die einer am Halter ausgebildeten Halter-Sitzfläche zugeordnet ist, wobei an der Sitzfläche wenigstens ein Zentrierelement zum Zentrieren des schneideinsatzes am Halter und wenigstens ein Sicherungsvorsprung oder wenigstens eine Sicherungsnut angeordnet ist, die zum Eingriff in wenigstens eine komplementäre Sicherungsnut oder wenigstens einen komplementären sicherungsvorsprung am Halter bestimmt ist und eine Verdrehsicherung zwischen Schneideinsatz und Halter ermöglicht, wobei sich der Sicherungsvorsprung oder die Sicherungsnut in radialer Richtung zwischen der Durchbrechung und dem Außenumfang erstreckt und in Axialrichtung von der Sitzfläche abragt oder im Fall der Sicherungsnut in Axialrichtung in die Sitzfläche eingeformt ist, und wobei der Sicherungsvorsprung oder die Sicherungsnut zwei Vorsprungsflanken oder Nutflanken aufweisen, die in Anlage mit komplementären Nutflanken oder Vorsprungsflanken am Halter bringbar sind, wobei der wenigstens eine Sicherungsvorsprung oder die wenigstens eine Sicherungsnut im Querschnitt sägezahnartig ausgebildet ist und eine der Vorsprungsflanken oder Nutflanken des Sicherungsvorsprungs oder der Sicherungsnut als Anschlagfläche zum Anschlag an eine komplementäre Halter-Anschlagfläche an einer der Vorsprungsflanken oder Nutflanken des Halters ausgebildet ist, wobei die Anschlagfläche im Wesentlichen senkrecht zur Sitzfläche ausgerichtet ist und sich in radialer Richtung zwischen der Durchbrechung und dem Außenumfang erstreckt.

Die Erfindung betrifft ferner noch ein Bearbeitungswerkzeug gemäß dem Oberbegriff des Anspruches 7.

Ein Schneideinsatz bzw. Bearbeitungswerkzeug dieser Art ist aus der WO 2006/136338 A1 bekannt. Dort ist eine Schnittstelle zur Verbindung eines Schneideinsatzes und eines Halters offenbart, die mit Vertiefungen und Erhöhungen versehen ist, die zumindest bereichsweise aneinander liegen und ineinander greifen. Die Vertiefungen und Erhöhungen können im Querschnitt gesehen unsymmetrisch, beispielsweise sägezahnförmig ausgebildet sein. Am Schneideinsatz sind eine Vielzahl von radial verlaufenden Vertiefungen und Erhebungen vorgesehen, die in komplementäre, am Halter ausgebildete Erhebungen und Vertiefungen eingreifen.

Ein Schneideinsatz bzw. Bearbeitungswerkzeug ist beispielsweise auch aus der DE 34 48 086 C2 bekannt. Der dort beschriebene Schneidkörper besitzt an seiner der Halter-Sitzfläche zugewandten Sitzfläche drei rippenartige Sicherungsvorsprünge, die gleiche Zentriwinkel miteinander einschließen und sich in radialer Richtung jeweils von der Durchbrechung des Schneidkörpers bis zu dessen Außenumfang erstrecken. Die Sicherungsvorsprünge sind im Querschnitt als gleichschenkelige Dreiecke ausgebildet, wobei an deren Längskanten eine Abflachung ausgebildet ist. Die Sicherungsvorsprünge am Schneidkörper passen in komplementär hierzu ausgebildete Sicherungsnuten an der Halter-Sitzfläche des Halters.

Die Positionierung der Schneidkörpers am Halter des Bearbeitungswerkzeugs muss hohen Anforderungen genügen. Die Lagerung des Schneidkörpers muss spielfrei sein, da ansonsten sehr hohe Schneidkräfte auf den Schneidkörper einwirken, was zu einer drastischen Verringerung der Standzeit, also erhöhten Verschleiß führt. Im ungünstigsten Fall kann das Material des Schneidkörpers brechen. Ferner sollten die komplementären Sicherungsvorsprünge und Sicherungsnuten an Schneidkörper und Halter auch eine zuverlässige Verdrehsicherung zwischen Schneideinsatz und Halter bereitstellen. Bei dem vorerwähnten Stand der Technik sind drei jeweils dreieckförmig ausgestaltete Sicherungsvorsprünge vorgesehen, die jeweils gleichartig ausgestaltete und ausgerichtete Flanken aufweisen. Die Flanken bilden also insgesamt sechs Flächen, die mit komplementären Flächen an den Flanken der Sicherungsnuten am Halter in Anlage gebracht werden können. Bei der Zentrierung des Schneidkörpers am Halter sind jedoch nur jeweils drei Flächen wirksam, also in Anlage mit dem komplementären Flächen an den Sicherungsnuten, da hierdurch eine statisch bestimmte Anlage des Schneidkörpers erzielt wird. Da jedoch insgesamt sechs Flächen am Schneidkörper zur Verfügung stehen, ist es möglich, dass bei einem Wechsel des Schneidkörpers andere drei Flächenpaare miteinander in Anlage sind. Eine exakte und reproduzierbare Positionierung von Schneidkörpern am Halter in immer derselben Lage ist daher nicht möglich. Die sogenannte Wechselgenauigkeit beim Wechsel des Schneidkörpers ist daher gering.

Ferner ist die Verdrehsicherung, die ebenfalls durch die komplementären Sicherungsvorsprünge und Sicherungsnuten an Schneidkörper und Halter gebildet wird, nicht zuverlässig, da die Sicherungsvorsprünge als gleichschenklige Dreiecke ausgebildet sind, deren Flanken ca. 30° gegenüber der Vertikalen geneigt sind, und somit bei Einwirkung hoher Schneidkräfte nicht mehr spielfrei in den zugeordneten Nuten sitzen oder sogar daraus heraus gedrückt werden können. Dies führt wiederum zu einer drastischen Verringerung der Standzeit des Schneidkörpers oder einem Brechen des Schneidkörper-Materials.

Aufgabe der Erfindung ist es, ein Schneideinsatz für ein Bearbeitungswerkzeug sowie ein Bearbeitungswerkzeug der eingangs erwähnten Art zu schaffen, der bzw. das sich durch geringen Verschleiß und daher hohe Standzeit auszeichnet.

Diese Aufgabe wird durch einen Schneideinsatz mit den Merkmalen des unabhängigen Anspruchs 1 und ein Bearbeitungswerkzeug mit den Merkmalen des Anspruchs 7 gelöst. Weiterbildungen der Erfindung sind in den Unteransprüchen dargestellt.

Der erfindungsgemäße Schneideinsatz zeichnet sich dadurch aus, dass drei in regelmäßigen Abständen um die Durchbrechung herum gruppierte Sicherungsvorsprünge oder Sicherungsnuten vorgesehen sind, deren jeweilige Anschlagfläche von der Anschlagfläche des benachbarten Sicherungsvorsprungs oder Sicherungsnut abgewandt ist.

Der Sicherungsvorsprung oder die Sicherungsnut besitzt also eine definierte Anschlagfläche, so dass bei der Positionierung des Schneideinsatzes am Halter immer nur diese Anschlagfläche mit der komplementären Halter-Anschlagfläche zusammenwirkt. Dadurch wird eine exakte Positionierung des Schneideinsatzes am Halter erzielt. Die Wechselgenauigkeit ist aufgrund der definierten Anschlagfläche sehr hoch. Durch die im Wesentlichen senkrechte Ausrichtung der Anschlagfläche in Bezug zur Sitzfläche wird verhindert, dass der Sicherungsvorsprung insbesondere beim Auftreten hoher Schneidkräfte mit Spiel in der komplementären Sicherungsnut sitzt oder sogar aus dieser herausgedrückt wird. Es wird also eine zuverlässige Verdrehsicherung zwischen Schneideinsatz und Halter durch den stets aufrechterhaltenen Formschluss zwischen der Anschlagfläche und der komplementären Halter-Anschlagfläche erzielt.

Bei einer Weiterbildung der Erfindung ist das wenigstens eine Zentrierelement ebenfalls als Sicherungsvorsprung oder als Sicherungsnut ausgebildet. vorzugsweise sind also wenigstens zwei Sicherungsvorsprünge oder Sicherungsnuten vorgesehen. Es ist jedoch auch möglich, dass der wenigstens eine Sicherungsvorsprung oder die wenigstens eine Sicherungsnut mit wenigstens einem Zentrierelement in Form von Rastmitteln zusammenwirkt, die in der richtigen Zentrierposition vom Schneideinsatz und Halter in eine Raststellung einrasten.

Es sind drei in regelmäßigen Abständen um die Durchbrechung herum gruppierte Sicherungsvorsprünge oder Sicherungsnuten vorgesehen, deren jeweilige Anschlagfläche von der Anschlagfläche des benachbarten Sicherungsvorsprungs oder der benachbarten Sicherungsnut abgewandt ist. Beim Zusammenbringen von Schneideinsatz und Halter können die nicht die Anschlagfläche bildenden anderen, rückenförmigen Vorsprungs- und Nutflanken aufeinander liegen, wodurch stets die drei gleichen Flächenpaare einander zugeordnet sind. Dadurch wird eine hohe Wechselgenauigkeit erzielt. Ferner findet dabei eine Selbstzentrierung des Schneideinsatzes am Halter statt.

In besonders bevorzugter weise sind die nicht die Anschlagfläche bildende anderen, rückenförmige Vorsprungs- oder Nutflanke des wenigstens einen Sicherungsvorsprungs oder der wenigstens einen Sicherungsnut konvex gekrümmt ausgebildet. Dadurch wird ein definierter Anlagebereich zwischen den miteinander komplementären Flächenpaaren an Halter und Schneideinsatz geschaffen. Zweckmäßigerweise ist lediglich die Vorsprungsflanke des Sicherungsvorsprungs konvex gekrümmt ausgebildet, während die rückenförmige Nutflanke der Sicherungsnut praktisch krümmungsfrei ausgebildet ist. Prinzipiell ist es jedoch auch möglich, dass sowohl die Vorsprungs- als auch die Nutflanken konvex gekrümmt sind.

Bei einer Weiterbildung der Erfindung schließen die Anschlagfläche und die zugeordnete rückenförmige Vorsprungs- oder Nutflanke des Sicherungsvorsprungs oder der sicherungsnut einen Keilwinkel α < 90° ein.

Zweckmäßigerweise ist der wenigstens eine Sicherungsvorsprung am Schneideinsatz ausgebildet. Am Halter befindet sich demnach die wenigstens eine komplementäre Sicherungsnut. Es ist jedoch aus möglich, dass der Schneideinsatz die wenigstens eine sicherungsnut aufweist und am Halter der wenigstens eine komplementäre Sicherungsvorsprung vorgesehen ist.

Bei einer Weiterbildung der Erfindung ist dem wenigstens einen Sicherungsvorsprung am Grund der Anschlagfläche eine, sich in radialer Richtung zwischen der Durchbrechung und dem Außenumfang des Schneideinsatzes erstreckende, kanalartige Freistellung zugeordnet. Diese ermöglicht einen passgenauen Anschlag der Anschlagfläche an die Halter-Anschlagfläche.

Die Erfindung betrifft ferner noch ein Bearbeitungswerkzeug mit den Merkmalen des unabhängigen Anspruchs 7.

Das Bearbeitungswerkzeug zur Bearbeitung von Werkstücken besitzt einen Halter und ein daran festgespannter Schneideinsatz mit Merkmalen nach einem der Ansprüche 1 bis 6. Der Halter weist einen Trägerabschnitt auf, an dem der Schneideinsatz festgespannt ist und in dem sich längs einer Halter-Längsachse ein Spannloch zur Festlegung des Spannelementes erstreckt, und wobei der Trägerabschnitt eine die das Spannloch umrandende Halter-Sitzfläche aufweist, die der Sitzfläche am schneideinsatz zugeordnet ist, wobei an der HalterSitzfläche wenigstens ein Zentrierelement zur Zentrierung der Schneideinsatzes am Halter und wenigstens ein Sicherungsvorsprung oder wenigstens eine Sicherungsnut angeordnet ist, die in wenigstens eine komplementären sicherungsnut oder wenigstens einen komplementären Sicherungsvorsprung des Schneideinsatzes eingreift und eine Verdrehsicherung zwischen Schneideinsatz und Halter ermöglicht, wobei sich der Sicherungsvorsprung oder die Sicherungsnut in radialer Richtung zwischen dem Spannloch und dem Halter-Außenumfang erstreckt und in Axialrichtung von der Halter-Sitzfläche abragen oder im Fall der Sicherungsnut in Axialrichtung in die Halter-Sitzfläche eingeformt ist, und wobei der Sicherungsvorsprung oder die Sicherungsnut zwei Vorsprungsflanken oder Nutflanken aufweist, die den Nutflanken oder Vorsprungsflanken des Schneideinsatzes zugeordnet ist, wobei der Sicherungsvorsprung oder die Sicherungsnut des Halters jeweils im Querschnitt sägezahnartig ausgebildet ist und eine der Vorsprungsflanken oder Nutflanken des Sicherungsvorsprungs oder der Sicherungsnut des Halters als Halter-Anschlagfläche zum Anschlag an die komplementäre Anschlagfläche des Schneideinsatzes ausgebildet ist, wobei die Halter-Anschlagfläche im Wesentlichen senkrecht zur Halter-Sitzfläche ausgerichtet ist und sich in radialer Richtung zwischen dem Spannloch und dem Halter-Außenumfang erstreckt. Das erfindungsgemäße Bearbeitungswerkzeug zeichnet sich dadurch aus, dass drei in regelmäßigen Abständen um das Spannloch herum gruppierte Sicherungsvorsprünge oder Sicherungsnuten vorgesehen sind, deren jeweilige Anschlagfläche von der Anschlagfläche des benachbarten Sicherungsvorsprungs oder Sicherungsnut abgewandt ist.

Zweckmäßigerweise befindet sich die Halter-Sitzfläche an der Stirnseite des Trägerabschnitts.

In besonders bevorzugter Weise ist im Halter wenigstens ein Kühlschmierstoffkanal zur Zuführung von Kühlschmierstoff ausgebildet, der in der Nähe der Halter-Sitzfläche mittels wenigstens einer Austrittsmündung ausmündet.

Bevorzugte Ausführungsbeispiele der Erfindung sind in der Zeichnung dargestellt und werden im Folgenden näher erläutert. In der Zeichnung zeigen:
- Figur 1: eine Seitenansicht eines ersten Ausführungsbei- spiels des erfindungsgemäßen Bearbeitungswerkzeugs,
- Figur 2: eine Draufsicht auf das Bearbeitungswerkzeug von Figur 1,
- Figur 3: einen Längsschnitt durch einen Teil des Halters des erfindungsgemäßen Bearbeitungswerkzeugs ohne Schneideinsatz entlang der Linie III-III in Figur 5,
- Figur 4: eine vergrößerte Darstellung der Einzelheit X von Figur 3,
- Figur 5: einen Querschnitt durch den Halter entlang der Li- nie V-V in Figur 3,
- Figur 6: einen Längsschnitt durch den Halter entlang der Li- nie VI-VI in Figur 5, wobei hier eine um 90° ge- drehte Schnittebene gegenüber dem Längsschnitt in Figur 3 gezeigt ist,
- Figur 7: eine Seitenansicht des erfindungsgemäßen Schneid- einsatzes für das erfindungsgemäße Bearbeitungs- werkzeug,
- Figur 8: eine Seitenansicht der gegenüber der Figur 7 ande- ren Seite des Schneideinsatzes, wobei die Sitzflä- che dargestellt ist,
- Figur 9: eine Seitenansicht der Schmalseite des Schneidein- satzes,
- Figur 10: eine gegenüber der Seitenansicht in Figur 9 um 90° gedrehte Seitenansicht des Schneideinsatzes,
- Figur 11: eine vergrößerte Darstellung der Einzelheit Y in Figur 10 und
- Figur 12: ein zweites Ausführungsbeispiel des erfindungsgemä- ßen Bearbeitungswerkzeugs.

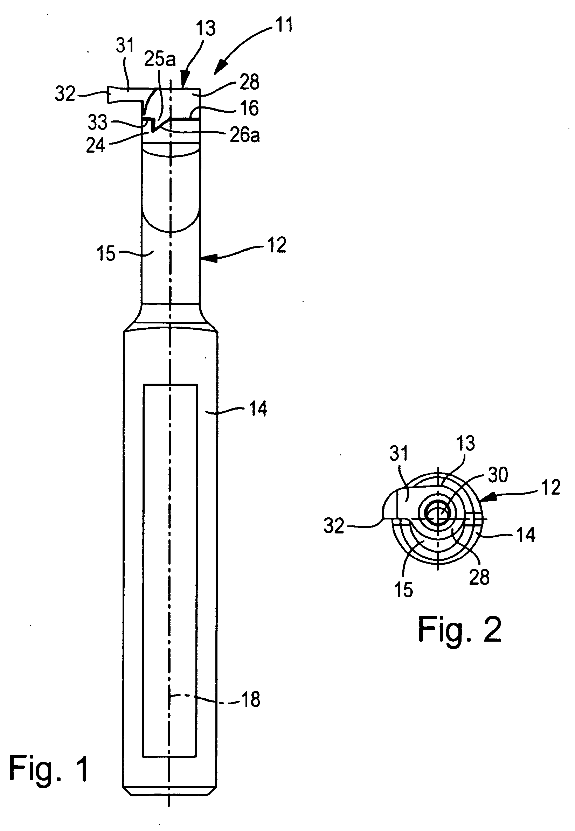

Figur 1 zeigt ein erstes Ausführungsbeispiel des erfindungsgemäßen Bearbeitungswerkzeugs 11 zur Bearbeitung von Werkstücken. Das Bearbeitungswerkzeug 11 ist gemäß erstem Ausführungsbeispiel als Fräswerkzeug zur Herstellung von Inneneinstichen in Werkstücken ausgebildet.

Das Bearbeitungswerkzeug 11 besitzt einen Halter 12, der auch als Wechselschneidhalter bezeichnet werden kann. Am Halter 12 ist ein nachfolgend noch detaillierter beschriebener Schneideinsatz 13 festspannbar.

Der Halter 12 ist schaftartig ausgestaltet und besitzt einen sich insbesondere über die Hälfte der Gesamtlänge des Halters 12 erstreckenden Einspannabschnitt 14, mit dem der Halter 12 in ein Spannfutter einer Frässpindel eingespannt werden kann. An den Einspannabschnitt 14 schließt sich, einstückig mit diesem verbunden, ein durchmesserkleinerer Trägerabschnitt 15 an, der ebenfalls schaftartig ausgestaltet ist. An der Stirnseite des Trägerabschnitts 15 ist eine Halter-Sitzfläche 16 ausgebildet, auf der in einer nachfolgend noch näher erläuterten Weise der Schneideinsatz 13 festspannbar ist.

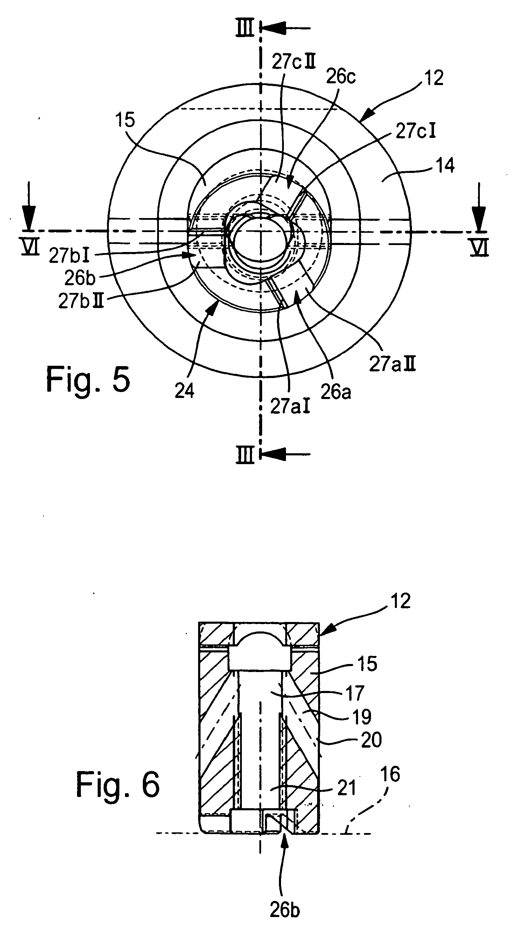

Das Bearbeitungswerkzeug 11 ist mit Innenkühlung ausgestattet. Hierzu befindet sich im Halter 12 ein sich koaxial zur Halter-Längsachse 18 und durch den gesamten Halter 12 erstreckender Kühlschmierstoffkanal 17, über den Kühlschmierstoff zur Halter-Sitzfläche 16 transportierbar ist. Der Kühlschmierstoffkanal 17 besitzt wie insbesondere in Figur 6 dargestellt wenigstens einen Abzweigkanal 19. Dieser Abzweigkanal 19 mündet über eine Austrittsmündung 20 am Umfang des Trägerabschnitts in der Nähe der Halter-Sitzfläche 16.

Der Halter 12 besitzt ferner ein Spannloch 21, das konzentrisch zur Halter-Längsachse 18 von der Halter-Sitzfläche 16 nach innen ragt. Zweckmäßigerweise besitzt das Spannloch 21 ein Innengewinde 22, so dass ein Spannelement 23 in Form einer Spannschraube ein- oder ausschraubbar ist, die dann den Schneideinsatz 13 am Halter 12 festspannt. Zweckmäßigerweise wird das Spannloch 21 nicht separat in den Halter 12 eingeformt, sondern wird von dem der Halter-Sitzfläche 16 zugewandten Bereich des Kühlschmierstoffkanals 17 gebildet, in den dann lediglich noch das Innengewinde 22 eingeschnitten werden muss.

Die Halter-Sitzfläche 16 des Halters 12 befindet sich an einem Kronenabschnitt 24, der am stirnseitigen Ende des Trägerabschnitts 15 sitzt und gegenüber dem Trägerabschnitt 15 einen kleineren Durchmesser aufweist. Der Trägerabschnitt 15 kann beispielsweise einen elliptischen Querschnitt besitzen, wohingegen der Kronenabschnitt 24 vorzugsweise mit kreisrundem Querschnitt ausgebildet ist. An der Halter-Sitzfläche 16 ist wenigstens ein Sicherungsvorsprung 25a, 25b, 25c oder wenigstens eine Sicherungsnut 26a, 26b, 26c sowie wenigstens ein Zentrierelement angeordnet. Zweckmäßigerweise befindet sich an der Halter-Sitzfläche 16 die wenigstens eine Sicherungsnut 26a, 26b, 26c. Zweckmäßigerweise wird das wenigstens eine Zentrierelement ebenfalls von wenigstens einem Sicherungsvorsprung 25a-c oder wenigstens einer Sicherungsnut 26a-c gebildet. Gemäß erstem Ausführungsbeispiel sind an der Halter-Sitzfläche 16 drei Sicherungsnuten 26a, 26b, 26c ausgebildet, die in regelmäßigen Abständen um das Spannloch 21 herum gruppiert sind. Die Sicherungsnuten 26a, 26b, 26c schließen also gleiche Zentriwinkel von 120° miteinander ein. Die Sicherungsnuten 26a, 26b, 26c erstrecken sich in radialer Richtung zwischen dem Spannloch 21 und dem Außenumfang des Kronenschnitts 24 und sind in Axialrichtung in die Halter-Sitzfläche 16 eingeformt.

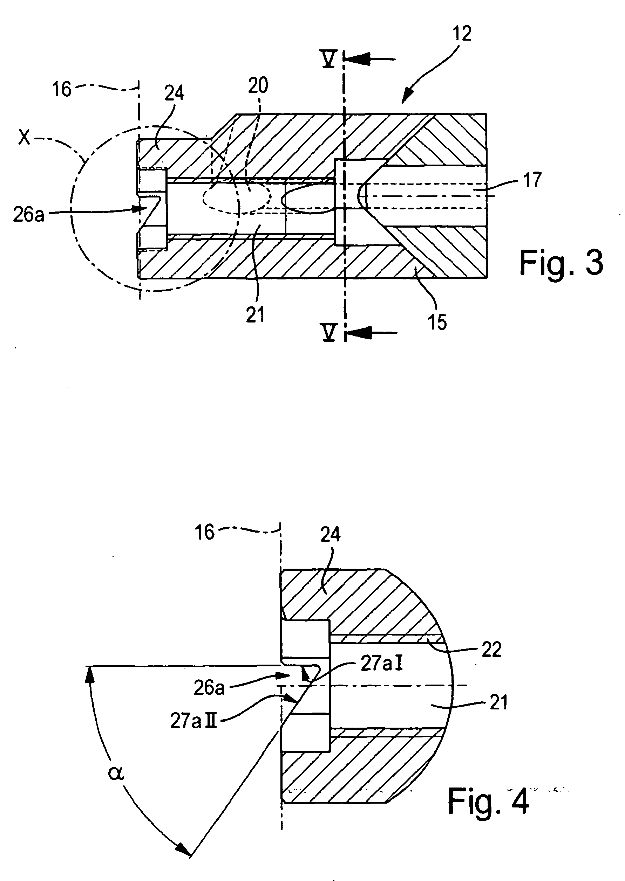

Wie insbesondere in Figur 4 dargestellt, besitzen die Sicherungsnuten 26a, 26b, 26c jeweils zwei Nutflanken 27aI, 27aII, 27bI, 27bII, 27cI, 27cII. Die Sicherungsnuten 26a-c sind im Querschnitt sägezahnartig ausgebildet, wobei eine der Nutflanken 27aI, 27bI, 27cI einer jeweiligen Sicherungsnut 26a-c als Halter-Anschlagfläche zum Anschlag an eine komplementäre Anschlagfläche am Schneideinsatz 13 ausgebildet ist. Die Anschlagfläche ist senkrecht zur Halter-Sitzfläche 16 ausgerichtet und erstreckt sich in radialer Richtung zwischen dem Spannloch 21 und dem Außenumfang des Kronenabschnitts 24. Unter senkrecht wird dabei auch eine geringfügige Neigung gegenüber der Vertikalen um wenige Grad verstanden. Wie insbesondere in Figur 4 dargestellt, schließen die Halter-Anschlagfläche und die nicht als Halter-Anschlagfläche fungierende andere Nutflanke 27aII, 27bII, 27cII einer jeweiligen Sicherungsnut 26a-c einen Keilwinkel α < 90° ein. Der Keilwinkel liegt vorzugsweise im Bereich zwischen 45° und 65°, insbesondere 50° und 60°. Beispielsweise kann der Keilwinkel ca. 55° betragen.

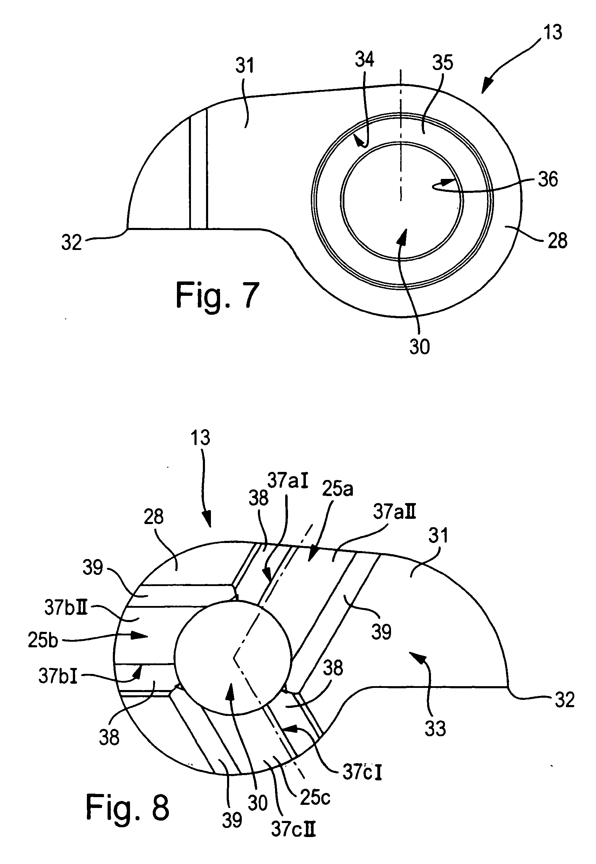

Die Figuren 7 bis 11 zeigen den erfindungsgemäßen Schneideinsatz 13 des erfindungsgemäßen Bearbeitungswerkzeugs 11. Der Schneideinsatz 13 ist gemäß erstem Ausführungsbeispiel als solcher für das Inneneinstechen von Werkstücken ausgebildet. Wie im zweiten Ausführungsbeispiel nachfolgend noch näher beschrieben, können auch Schneideinsätze 13 bzw. Schneidplatten oder Schneidköpfe verwendet werden, die für andere spanabhebende Aufgaben verwendet werden, beispielsweise Wendeschneidplatten zum Fräsen, beispielsweise Gewindefräsen, oder Drehen.

Der Schneideinsatz 13 besitzt einen Basisabschnitt 28, durch den sich längs einer Längsachse 29 eine Durchbrechung 30 zur Durchführung des Spannelementes 23 hindurch erstreckt. Zweckmäßigerweise ist die Durchbrechung als zentrisches Loch im Schneideinsatz 13 ausgebildet. Gemäß erstem Ausführungsbeispiel befindet sich am Außenumfang des Basisabschnitts 28 ein nach radial außen abragender Schneidabschnitt 31 mit einer Schneidkante 32. Der Schneidabschnitt 31 steht also nasenartig vom Außenumfang des Basisabschnitts 28 ab, wie insbesondere in Figur 7 oder 8 gezeigt. Die Schneidkante 32 verläuft hier parallel zur Längsachse 29.

Der Basisabschnitt 28 besitzt eine die Durchbrechung 30 umrandende Sitzfläche 33, die der Halter-Sitzfläche 16 zugeordnet ist. Gemäß erstem Ausführungsbeispiel sind an der Sitzfläche 33 drei Sicherungsvorsprünge 25a-c oder Sicherungsnuten 26a-c angeordnet. Zweckmäßigerweise befinden sich an dem Schneideinsatz 13 drei Sicherungsvorsprünge 25a-c, die zum Eingriff in die komplementären Sicherungsnuten 26a-c am Halter 12 bestimmt sind.

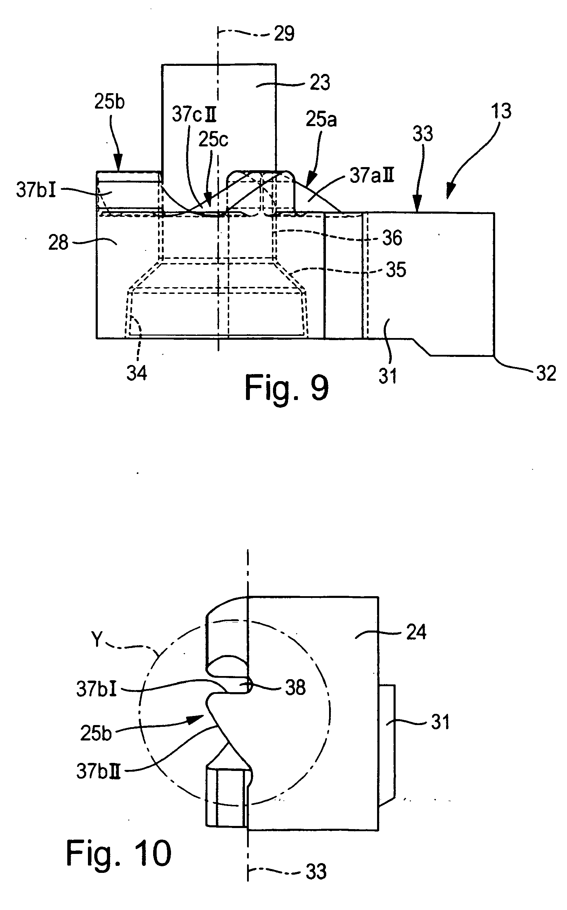

Wie insbesondere in Figur 9 dargestellt, besitzt die Durchbrechung 30 einen Einführabschnitt 34, der sich über ein konusförmigen Anlagenabschnitt 35 in einen durchmesserkleineren Endabschnitt 26 verjüngt. Am konusförmigen Anlageabschnitt 35 stützt sich der Schraubenkopf der Spannschraube ab.

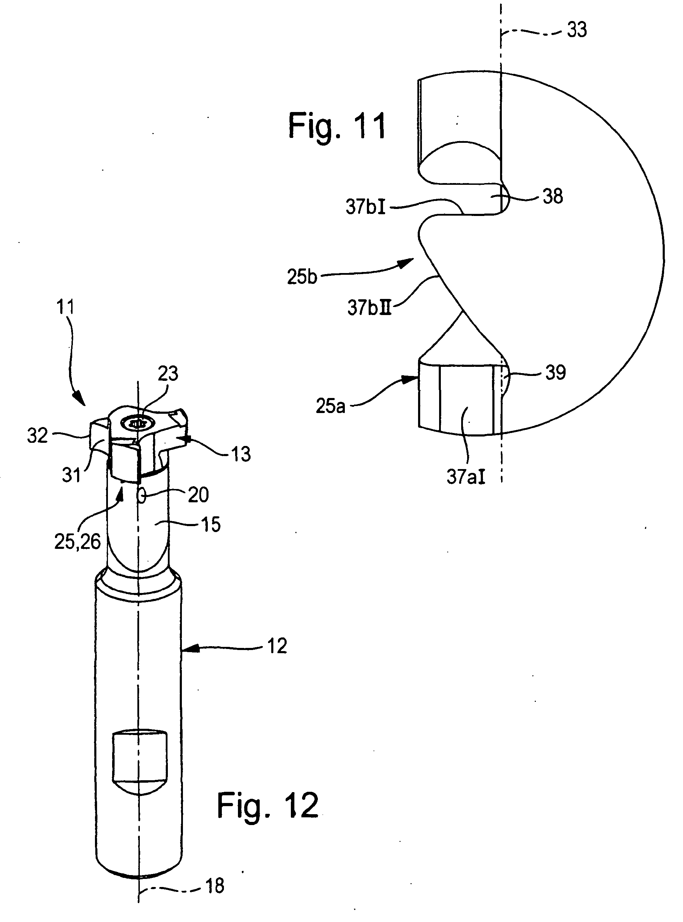

Die Sicherungsvorsprünge 25a-c erstrecken sich jeweils in radialer Richtung zwischen der Durchbrechung 30 und dem Außenumfang des Basisabschnitts 28 und ragen in Axialrichtung von der Sitzfläche 33 ab. Die Sicherungsvorsprünge 25a-c besitzen jeweils zwei Vorsprungsflanken 37aI-II, 37bI-II, 37cI-II. Wie insbesondere in Figuren 10 und 11 gezeigt, besitzen die Sicherungsvorsprünge 25a-c jeweils ein sägezahnartiges Profil, wobei eine der Vorsprungsflanken 37aI, 37bI, 37cI als Anschlagfläche zum Anschlag an die komplementäre Halter-Anschlagfläche an einer der Nutflanken 27aI, 27cI, 27cI des Halters 12 ausgebildet ist. Die Anschlagfläche ist senkrecht zur Sitzfläche 33 ausgerichtet und erstreckt sich in radialer Richtung zwischen der Durchbrechung 30 und dem Außenumfang des Basisabschnitts 28.

Wie insbesondere in Figur 11 dargestellt, sind die nicht die Anschlagflächen bildenden anderen rückenförmigen Vorsprungsflanken 37aII, 37bII, 37cII der Sicherungsvorsprünge 25a-c konvex gekrümmt ausgebildet.

Am Grund der die Anschlagflächen bildenden Vorsprungsflanken 37aI, 37bI, 37cI ist eine sich in radialer Richtung zwischen der Durchbrechung 30 und dem Außenumfang des Schneideinsatzes 13 erstreckende kanalartige Freistellung 37 vorgesehen. Diese kanalartige Freistellung 37 dient dazu, dass die Sicherungsvorsprünge 25a-c exakt in die komplementären Sicherungsnuten 26a-26c eingreifen können. Weiterhin ist auch am Grund der konvex gekrümmten Vorsprungsflanken 37aII, 37bII, 37cII eine weitere Freistellung 38 vorgesehen.

Die Sicherungsvorsprünge 25a-c am Schneideinsatz 13 sind also nach Art von Sägezähnen ausgestaltet, wobei die die Anschlagflächen bildenden Vorsprungsflanken 37aI, 37bI, 37cI jeweils als Zahnbrust und die anderen Vorsprungsflanken als Zahnrücken fungieren können.

Die Figur 12 zeigt ein zweites Ausführungsbeispiel des erfindungsgemäßen Bearbeitungswerkzeugs 11. Dieses zweite Ausführungsbeispiel unterscheidet sich vom zuvor beschriebenen ersten Ausführungsbeispiel durch die Art des Schneideinsatzes 13. Der Schneideinsatz 13 dient hier zum Fräsen, insbesondere zum Fräsen von T-Nuten. Dieser Schneideinsatz 13 besitzt drei am Umfang des Basisabschnitts 28 in regelmäßigen Abständen zueinander stehende, nach radial außen ragende Schneidabschnitte 31 mit jeweils einer Schneidkante 32. Die Positionierung, Zentrierung, Drehsicherung und das Verspannen des Schneideinsatzes am zugeordneten Halter erfolgt identisch zu dem zuvor bereits beschriebenen ersten Ausführungsbeispiel.

Zum Festspannen des Schneideinsatzes 13 bei den beiden zuvor beschriebenen Ausführungsbeispielen wird zunächst der Schneideinsatz 13 an den Halter 12 angesetzt, und zwar so, dass die Sitzfläche 33 am Schneideinsatz 13 der Halter-Sitzfläche 16 zugeordnet ist. Der Schneideinsatz 13 wird dann auf die Halter-Sitzfläche 16 aufgesetzt, wobei die konvex gekrümmten Vorsprungsflanken 37aII, 37bII und 37cII mit den komplementären Nutflanken 27aII, 27bII und 27cII in Kontakt kommen. Durch die drei Flächenpaare wird eine definierte Anlage des Schneideinsatzes 13 am Halter 12 erzielt. Der Schneideinsatz 13 wird dadurch auch automatisch zum Halter 12 zentriert. Schneideinsatz 13 und Halter 12 werden dann gegeneinander verdreht, bis die von zueinander komplementären, die Anschlagflächen und Halter-Anschlagflächen bildenden Vorsprungsflanken 37aI, 37bI, 37cI an Schneideinsatz 13 und Halter 12 auf Anschlag zueinander liegen. Durch die beiden auf Anschlag liegenden Anschlagflächen und komplementären Halter-Anschlagflächen ist eine Verdrehsicherung zwischen Schneideinsatz 13 und Halter 12 gegeben, die auch hohen Bearbeitungskräften standhält.

Ist die korrekte Position des Schneideinsatzes 13 am Halter 12 erreicht, wird die Spannschraube eingeführt und der Schneideinsatz 13 wird am Halter 12 festgespannt.

## Patentansprüche

1. Schneideinsatz für ein Bearbeitungswerkzeug (11), mit einem Basisabschnitt (28), durch den sich längs einer Längsachse (29) eine Durchbrechung (30) zur Durchführung eines Spannelementes (23) hindurch erstreckt, durch das der Schneideinsatz (13) an einem zugeordneten Halter (12) des Bearbeitungswerkzeugs (11) festspannbar ist, wobei am Außenumfang des Basisabschnitts (28) wenigstens ein nach radial außen abragender Schneideabschnitt (31) mit wenigstens einer Schneidkante (32) angeordnet ist, und wobei der Basisabschnitt (28) eine die Durchbrechung (30) umrandende Sitzfläche (33) aufweist, die einer am Halter (12) ausgebildeten Halter-Sitzfläche (16) zugeordnet ist, wobei an der Sitzfläche (33) wenigstens ein Zentrierelement zum zentrieren des Schneideinsatzes (13) am Halter (12) und wenigstens ein Sicherungsvorsprung (25a, 25b, 25c) oder eine Sicherungsnut (26a, 26b, 26c) angeordnet sind, die zum Eingriff in wenigstens eine komplementäre Sicherungsnut (26a, 26b, 26c) oder wenigstens einen komplementären Sicherungsvorsprung (25a, 25b, 25c) am Halter (12) bestimmt ist und eine Verdrehsicherung zwischen Schneideinsatz (13) und Halter (12) ermöglicht, wobei sich der Sicherungsvorsprung (25a-c) oder die Sicherungsnut (26a-c) in radialer Richtung zwischen der Durchbrechung (30) und dem Außenumfang erstreckt und in Axialrichtung von der Sitzfläche (33) abragt oder im Fall der Sicherungsnut in Axialrichtung in die Sitzfläche (33) eingeformt ist, und wobei der Sicherungsvorsprung (25a-c) oder die Sicherungsnut (26a-c) zwei Vorsprungsflanken (37aI-II, 37bI-II, 37cI-II) oder Nutflanken (27aI-II, 27bI-II, 27cI-II) aufweisen, die in Anlage mit komplementären Nutflanken (27aI-II, 27bI-II, 27cI-II) oder Vorsprungsflanken (37aI-II, 37bI-II, 37cI-II) am Halter (12) bringbar sind, wobei der wenigstens eine Sicherungsvorsprung (25a-c) oder die wenigstens eine Sicherungsnut (26a-c) im Querschnitt sägezahnartig ausgebildet ist und eine der Vorsprungsflanken (37aI-II, 37bI-II, 37cI-II) oder Nutflanken (27aI-II, 27bI-II, 27cI-II) des Sicherungsvorsprungs (25a-c) oder der Sicherungsnut (26a-c) als Anschlagfläche zum Anschlag an eine komplementäre Halter-Anschlagfläche an einer der vorsprungsflanken (37aI-II, 37bI-II, 37cI-II) oder Nutflanken (27aI-II, 27bI-II, 27cI-II) des Halters (12) ausgebildet ist, wobei die Anschlagfläche im wesentlichen senkrecht zur Sitzfläche (16) ausgerichtet ist und sich in radialer Richtung zwischen der Durchbrechung (30) und dem Außenumfang erstreckt, **dadurch gekennzeichnet, dass** drei in regelmäβigen Abständen um die Durchbrechung herum gruppierte Sicherungsvorsprünge (25a-c) oder Sicherungsnuten (26a-c) vorgesehen sind, deren jeweilige Anschlagfläche von der Anschlagfläche des benachbarten Sicherungsvorsprungs (25a-c) oder Sicherungsnut (26a-c) abgewandt ist.

2. Schneideinsatz nach Anspruch 1, **dadurch gekennzeichnet, dass** die nicht die Anschlagfläche bildende andere rückenförmige Vorsprungsflanke (37aII, 37bII, 37cII) oder Nutflanke (27aII, 27bII, 27cII) des wenigstens einen Sicherungsvorsprungs (25a-c) oder der wenigstens einen Sicherungsnut (26a-c) konvex gekrümmt ausgebildet ist.

3. Schneideinsatz nach Anspruch 2, **dadurch gekennzeichnet, dass** die Anschlagfläche und die zugeordnete rückenförmige Vorsprungsflanke (37aII, 37bII, 37cII) oder Nutflanke (27aII, 27bII, 27cII) einen Keilwinkel α < 90° einschließen.

4. Schneideinsatz nach einem der vorhergehenden Ansprüche, **dadurch gekennzeichnet, dass** der wenigstens eine Sicherungsvorsprung (25a-c) am schneideinsatz (13) ausgebildet ist.

5. Schneideinsatz nach Anspruch 4, **dadurch gekennzeichnet, dass** der wenigstens einen Sicherungsvorsprung (25a-c) aus dem Material des Schneideinsatzes (13) heraus geformt ist.

6. Schneideinsatz nach einem der vorhergehenden Ansprüche, **dadurch gekennzeichnet, dass** dem wenigstens einen Sicherungsvorsprung (25a-c) am Grund der Anschlagfläche eine sich in radialer Richtung zwischen der Durchbrechung (30) und dem Außenumfang des Basisabschnitts (28) erstreckende, kanalartige Freistellung (38) zugeordnet ist.

7. Bearbeitungswerkzeug zur Bearbeitung von Werkstücken, mit einem Halter (12) und einem daran festgespannten Schneideinsatz (13) nach einem der Ansprüche 1 bis 6, wobei der Halter (12) einen Trägerabschnitt (15) aufweist, an dem der schneideinsatz (13) festgespannt ist und in dem sich längs einer Halter-Längsachse (18) ein Spannloch (21) zur Festlegung des Spannelementes (23) erstreckt, und wobei der Trägerabschnitt (15) ein das Spannloch (21) umrandende Halter-Sitzfläche (16) aufweist, die der Sitzfläche (33) am Schneideinsatz (13) zugeordnet ist, wobei an der Halter-Sitzfläche (16) wenigstens ein Zentrierelement zur Zentrierung des Schneideinsatz (13) am Halter (12) und wenigstens ein Sicherungsvorsprung (25a-c) oder wenigstens eine Sicherungsnut (26a-c) angeordnet sind, die in wenigstens eine komplementäre Sicherungsnut (26a-c) oder wenigstens einen komplementären Sicherungsvorsprung (25a-c) des Schneideinsatzes (13) eingreifen und eine Verdrehsicherung zwischen Schneideinsatz (13) und Halter (12) ermöglichen, wobei sich der Sicherungsvorsprung (25a-c) oder die Sicherungsnut (26a-c) in radialer Richtung zwischen dem Spannloch (21) und dem Halter-Außenumfang erstreckt und in Axialrichtung von der Halter-Sitzfläche (16) abragt oder im Fall einer Sicherungsnut (26a-c) in Axialrichtung in die Halter-Sitzfläche (16) eingeformt ist, und wobei der Sicherungsvorsprung (25a-c) oder die Sicherungsnut (26a-c) zwei vorsprungsflanken (37aI-II, 37bI-II, 37cI-II) oder Nutflanken (27aI-II, 27bI-II, 27cI-II) aufweisen, die den Nutflanken (27aI-II, 27bI-II, 27cI-II) oder Vorsprungsflanken (37aI-II, 37bI-II, 37cI-II) des Schneideinsatz (13) zugeordnet sind, wobei der wenigstens eine sicherungsvorsprung (25a-c) oder die wenigstens eine Sicherungsnut (26a-c) des Halter (12) im Querschnitt sägezahnartig ausgebildet ist und eine der Vorsprungsflanken (37aI-II, 37bI-II, 37cI-II) oder Nutflanken (27aI-II, 27bI-II, 27cI-II) des Sicherungsvorsprungs (25a-c) oder der Sicherungsnut (26a-c) als Halter-Anschlagfläche zum Anschlag an die komplementäre Anschlagfläche (33) des Schneideinsatz (13) ausgebildet ist, wobei die Halter-Anschlagfläche im Wesentlichen senkrecht zur Halter-Sitzfläche (16) ausgerichtet ist und sich in radialer Richtung zwischen dem Spannloch (21) und dem Halter-Außenumfang erstreckt, **dadurch gekennzeichnet, dass** drei in regelmäßigen Abständen um das Spannloch (21) herum gruppierte Sicherungsvorsprünge (25a-c) oder Sicherungsnuten (26a-c) vorgesehen sind, deren jeweilige Anschlagfläche von der Anschlagfläche des benachbarten Sicherungsvorsprungs (25a-c) oder Sicherungsnut (26a-c) abgewandt ist.

8. Bearbeitungswerkzeug nach Anspruch 7, **dadurch gekennzeichnet, dass** die Sicherungsnuten (26a-c) am Halter (12) ausgebildet sind.

9. Bearbeitungswerkzeug nach Anspruch 7 oder 8, **dadurch gekennzeichnet, dass** sich die Halter-Sitzfläche (16) an der Stirnseite des Trägerabschnitts (15) befindet.

10. Bearbeitungswerkzeug nach einem der Ansprüche 7 bis 9, **dadurch gekennzeichnet, dass** im Halter wenigstens ein Kühlschmierstoffkanal (17) zur Zuführung von Kühlschmierstoff ausgebildet ist, der in der Nähe der Halter-Sitzfläche (16) mittels wenigstens einer Austrittsmündung (20) ausmündet.

## Claims

1. Cutting insert for a machine tool (11), with a base section (28), through which extends along a longitudinal axis (29) an opening (30) for the feeding through of a clamping element (23), by means of which the cutting insert (13) may be clamped to an assigned holder (12) of the machine tool (11), wherein on the outer periphery of the base section (28) there is provided at least one radially outwards extending cutting section (31) with at least one cutting edge (32), and wherein the base section (28) has a seat (33) bordering the opening (30), to which is assigned a holder seating surface (16) formed on the holder (12), wherein there is provided on the seat (33) at least one centring element for centring the cutting insert (13) on the holder (12) and at least one locking projection (25a, 25b, 25c) or one locking groove (26a, 26b, 26c) designed to engage in at least one complementary locking groove (26a, 26b, 26c) or at least one complementary locking projection (25a, 25b, 25c) on the holder (12) and facilitating anti-rotation locking between cutting insert (13) and holder (12), wherein the locking projection (25a-c) or the locking groove (26a-c)) extends in the radial direction between the opening (30) and the outer periphery and in the axial direction extends from the seat (33) or in the case of the locking groove is formed in the seat (33), and wherein the locking projection (25a-c) or the locking groove (26a-c) has two projection sides (37aI-II, 37bI-II, 37cI-II) or groove sides (27aI-II, 27bI-II, 27cI-II) which may be brought into contact with complementary groove sides (27aI-II, 27bI-II, 27cI-II) or projection sides (37aI-II, 37bI-II, 37cI-II) on the holder (12), wherein the locking projection or projections (25a-c) or the locking groove or grooves (26a-c) has or have a saw-toothed cross-section, and one of the projection sides (37aI-II, 37bI-II, 37cI-II) or groove sides (27aI-II, 27bI-II, 27cI-II) of the locking projection (25a-c) or the locking groove (26a-c)) is designed as a stop face to stop at a complementary holder stop face on one of the projection sides (37aI-II, 37bI-II, 37cI-II) or groove sides (27aI-II, 27bI-II, 27cI-II) of the holder (12), wherein the stop face is aligned substantially at right-angles to the holder seating surface (16) and extends radially between the opening (30) and the outer periphery, **characterised in that** three locking projections (25a-c) or locking grooves (26a-c) are provided grouped at regular intervals around the opening, with their respective stop face facing away from the stop face of the adjacent locking projection (25a-c) or locking groove (26a-c).

2. Cutting insert according to claim 1, **characterised in that** the other, rear-like projection side (37aI-II, 37bI-II, 37cI-II) or groove side (27aI-II, 27bI-II, 27cI-II) of the locking projection or projections (25a-c) or the locking groove or grooves (26a-c) not forming the stop face is convexly curved.

3. Cutting insert according to claim 2, **characterised in that** the stop face and the assigned rear-like projection sides (37aI-II, 37bI-II, 37cI-II) or groove sides (27aI-II, 27bI-II, 27cI-II) enclose a wedge angle of α < 90°.

4. Cutting insert according to any of the preceding claims, **characterised in that** the locking projection or projections (25a-c) is or are formed on the cutting insert (13).

5. Cutting insert according to claim 4, **characterised in that** the the locking projection or projections (25a-c) is or are formed from the material of the cutting insert (13).

6. Cutting insert according to any of the preceding claims, **characterised in that** the locking projection or projections (25a-c) is or are assigned at the base of the stop face a channel-like open position (38) extending radially between the opening (30) and the outer periphery of the base section (28).

7. Machine tool for the machining of workpieces, with a holder (12) and a cutting insert (13) clamped to the former, according to any of claims 1 to 6, wherein the holder (12) has a support section (15) to which the cutting insert (13) is clamped and in which a clamping hole (21) for fixing the clamping element (23) extends along a holder longitudinal axis (18), and wherein the support section (15) has a holder seating surface (16) bordering the clamping hole (21) which is assigned to the seat (33) on the cutting insert (13), wherein there is provided on the holder seating surface (16) at least one centring element for centring the cutting insert (13) on the holder (12) and at least one locking projection (25a-c) or at least one locking groove (26a-c), which engage in at least one complementary locking groove (26a-c) or at least one complementary locking projection (25a-c) of the cutting insert (13) and facilitate anti-rotation locking between cutting insert (13) and holder (12), wherein the locking projection (25a-c) or the locking groove (26a-c) extends in the radial direction between the clamping hole (21) and the holder outer periphery and in the axial direction extends outwards from the holder seating surface (16) or in the case of a locking groove (26a-c) is formed in the holder seating surface (16), and wherein the locking projection (25a-c) or the locking groove (26a-c) has two projection sides (37aI-II, 37bI-II, 37cI-II) or groove sides (27aI-II, 27bI-II, 27cI-II) which are assigned to the groove sides (27aI-II, 27bI-II, 27cI-II) or projection sides (37aI-II, 37bI-II, 37cI-II) of the cutting insert (13), wherein the locking projection or projections (25a-c) or the locking groove or grooves (26a-c) has or have a saw-toothed cross-section, and one of the projection sides (37aI-II, 37bI-II, 37cI-II) or groove sides (27aI-II, 27bI-II, 27cI-II) of the locking projection (25a-c) or the locking groove (26a-c) is designed as a holder stop face to stop at the complementary stop face (33) of the cutting insert (13), wherein the holder stop face is aligned substantially at right-angles to the holder seating surface (16) and extends radially between the clamping hole (21) and the holder outer periphery, **characterised in that** three locking projections (25a-c) or locking grooves (26a-c) are provided grouped at regular intervals around the clamping hole (21), with their respective stop face facing away from the stop face of the adjacent locking projection (25a-c) or locking groove (26a-c).

8. Machine tool according to claim 7, **characterised in that** the locking grooves (26a-c) are formed on the holder (12).

9. Machine tool according to claim 7 or 8, **characterised in that** the holder seating surface (16) is located on the end face of the support section (15).

10. Machine tool according to any of claims 7 to 9, **characterised in that** there is formed in the holder at least one cooling lubricant passage (17) for the supply of cooling lubricant and which opens out by means of at least one outlet orifice (20) in the vicinity of the holder seating surface (16).

## Revendications

1. Plaquette de coupe pour un outil d'usinage (11), avec une portion de base (28), à travers laquelle s'étend, le long d'un axe longitudinal (29), une perforation (30) permettant le passage d'un élément de serrage (23), grâce auquel la plaquette de coupe (13) peut être serrée sur un support (12) correspondant de l'outil d'usinage (11), au moins une portion de coupe (31) dépassant radialement vers l'extérieur avec au moins une arête de coupe (32) étant disposée sur la circonférence extérieure de la portion de base (28) et la portion de base (28) comprenant une surface d'assise (33) entourant le passage (30), correspondant à une surface d'assise du support (16) formée sur le support (12), au moins un élément de centrage pour le centrage de la plaquette de coupe (13) sur le support (12) et au moins une saillie de fixation (25a, 25b, 25c) ou une rainure de fixation (26a, 26b, 26c) étant disposés sur la surface d'assise (33), destinés à s'emboîter dans au moins une rainure de fixation complémentaire (26a, 26b, 26c) ou au moins une saillie de fixation complémentaire (25a, 25b, 25c) sur le support (12) et permet une protection anti-torsion entre la plaquette de coupe (13) et le support (12), la saillie de fixation (25 a-c) ou la rainure de fixation (26 a-c) s'étendant dans la direction radiale entre la perforation (30) et la circonférence extérieure et dépassant, dans la direction axiale, de la surface d'assise (33) ou, dans le cas de la rainure de fixation, est formée, dans la direction axiale, dans la surface d'assise (33) et la saillie de fixation (25a-c) ou la rainure de fixation (26 a-c) comprenant deux flancs de saillies (37aI-II, 37bI-II, 37cI-II) ou deux flancs de rainures (27al-II, 27bI-II, 27cI-II) qui peuvent être mis en appui, avec des flancs de rainures complémentaires (27aI-II, 27bI-II, 27cI-II) ou des flancs de saillies complémentaires (37aI-II, 37bI-II, 37cI-II) contre le support (12), l'au moins une saillie de fixation (25 a-c) ou l'au moins une rainure de fixation (26 a-c) présentant une section en dents de scie et un des flancs de saillies (37aI-II, 37bI-II, 37cI-II) ou des flancs de rainures (27aI-II, 27bI-II, 27cI-II) de la saillie de fixation (25 a-c) ou de la rainure de fixation (26 a-c) est conçu comme une surface de butée pour un appui contre une surface de butée de support complémentaire sur un des flancs de saillies (37aI-II, 37bI-II, 37cI-II) ou des flancs de rainures (27aI-II, 27bI-II, 27cI-II) du support (12), la surface de butée étant globalement perpendiculaire à la surface d'assise (16) et s'étendant dans la direction radiale entre la perforation (30) et la circonférence extérieure, **caractérisée en ce que** trois saillies de fixation (25 a-c) ou rainures de fixation (26 a-c) regroupées à intervalles réguliers autour de la perforation étant prévues, dont la surface de butée correspondante est orientée du côté opposé à la surface de butée de la saillie de fixation (25 a-c) ou de la rainure de fixation (26 a-c) adjacente.

2. Plaquette de coupe selon la revendication 1, **caractérisée en ce que** l'autre flanc de saillie (37aII, 37bII, 37cII) ou l'autre flanc de rainure (27aII, 27bII, 27cII), ne formant pas la surface de butée, de l'au moins une saillie de fixation (25 a-c) ou de l'au moins une rainure de fixation (26 a-c) présente une forme incurvée convexe.

3. Plaquette de coupe selon la revendication 2, **caractérisée en ce que** la surface de butée et la saillie de fixation (37aII, 37bII, 37cII) ou la rainure de fixation (27aII, 27bII, 27cII) correspondante forment un angle de taillant α < 90°.

4. Plaquette de coupe selon l'une des revendications précédentes, **caractérisée en ce que** l'au moins une saillie de fixation (25 a-c) se trouve sur la plaquette de coupe (13).

5. Plaquette de coupe selon la revendication 4, **caractérisée en ce que** l'au moins une saillie de fixation (25 a-c) est constituée du matériau de la plaquette de coupe (13).

6. Plaquette de coupe selon l'une des revendications précédentes, **caractérisée en ce que**, à l'au moins une saillie de fixation (25 a-c) correspond, sur le fond de la surface de butée, un dégagement (38) en forme de canal qui s'étend dans la direction radiale entre la perforation (30) et la circonférence extérieure de la portion de base (28).

7. Outil d'usinage pour l'usinage de pièces, avec un support (12) et une plaquette de coupe (13) serrée sur celui-ci, selon l'une des revendications 1 à 6, le support (12) comprenant une portion porteuse (15) sur laquelle la plaquette de coupe (13) est serrée et dans laquelle s'étend, le long d'un axe longitudinal de support (18), un trou de serrage (21) pour la fixation de l'élément de serrage (23) et la portion porteuse (15) comprenant une surface d'assise de support (16) entourant le trou de serrage (21), cette surface d'assise correspondant à la surface d'assise (33) de la plaquette de coupe (13), au moins un élément de centrage pour le centrage de la plaquette de coupe (13) sur le support (12) étant prévu sur la surface d'assise de support (16) et au moins une saillie de fixation (25 a-c) ou au moins une rainure de fixation (26 a-c) étant prévus, qui s'emboîtent dans au moins une rainure de fixation complémentaire (26 a-c) ou au moins une saillie de fixation (25 a-c) de la plaquette de coupe (13) et permettent une protection anti-torsion entre la plaquette de coupe (13) et le support (12), la saillie de fixation (25 a-c) ou la rainure de fixation (26 a-c) s'étendant, dans la direction radiale entre le trou de serrage (21) et la circonférence extérieure du support et dépassant, dans la direction axiale, de la surface d'assise de support (16) ou, dans le cas d'une rainure de fixation (26 a-c), étant formée dans la direction axiale dans la surface d'assise de support (16) et la saillie de fixation (25 a-c) ou la rainure de fixation (26 a-c) comprenant deux flancs de saillie (37aI-II, 37bI-II, 37cI-II) ou deux flancs de rainure (27aI-II, 27bI-II, 27cI-II) correspondant aux flancs de rainure (27aI-II, 27bI-II, 27cI-II) ou aux flancs de saillie (37aI-II, 37bI-II, 37cI-II) de la plaquette de coupe (13), l'au moins une saillie de fixation (25 a-c) ou l'au moins une saillie de fixation (26 a-c) du support (12) présentant une section en dents de scie et une des flancs de saillie (37aI-II, 37bI-II, 37cI-II) ou des flancs de rainure (27aI-II, 27bI-II, 27cI-II) de la saillie de fixation (25 a-c) ou de la rainure de fixation (26 a-c) étant conçue comme une surface de butée du support destinée à être appuyée contre la surface de butée complémentaire (33) de la plaquette de coupe (13), la surface de butée du support étant globalement perpendiculaire à la surface d'assise de support (16) et s'étendant dans la direction radiale entre le trou de serrage (21) et la circonférence extérieure du support, **caractérisée en ce que** trois saillies de fixation (25 a-c) ou rainures de fixation (26 a-c) regroupées à intervalles réguliers autour du trou de serrage (21) sont prévues, dont la surface de butée correspondante est orientée du côté opposé à la surface de butée de la saillie de fixation (25 a-c) ou de la rainure de fixation (26 a-c) adjacente.

8. Outil d'usinage selon la revendication 7, **caractérisé en ce que** les rainures de fixation (26 a-c) se trouvent sur le support (12).

9. Outil d'usinage selon la revendication 7 ou 8, **caractérisé en ce que** la surface d'assise du support (16) se trouve sur le côté frontal de la portion porteuse (15).

10. Outil d'usinage selon l'une des revendications 7 à 9, **caractérisé en ce que**, dans le support, est réalisé au moins un canal de fluide de refroidissement (17) pour une alimentation en lubrifiant de refroidissement, qui débouche à proximité de la surface d'assise du support (16) par au moins une bouche de sortie (20).
